(19) **Europäisches Patentamt**
**European Patent Office**
**Office européen des brevets**

(11) **EP 2 458 853 A1**

(12) **EUROPEAN PATENT APPLICATION**

(43) Date of publication:
**30.05.2012 Bulletin 2012/22**

(51) Int Cl.:
**H04N 5/907** (2006.01)

(21) Application number: **11170508.3**

(22) Date of filing: **20.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2010 JP 2010267630**

(71) Applicant: **Kabushiki Kaisha Toshiba Tokyo 105-8001 (JP)**

(72) Inventors:
• **Iwahara, Hiroki**
  **Tokyo, 105-8001 (JP)**
• **Sato, Jun**
  **Tokyo, 105-8001 (JP)**
• **Kobayashi, Naomiki**
  **Tokyo, 105-8001 (JP)**

(74) Representative: **HOFFMANN EITLE**
  **Arabellastraße 4**
  **81925 München (DE)**

(54) **A recorder and a file dividing method**

(57) According to one embodiment, a recorder (1) includes: a content selection receiver (13) configured to receive selection of content data (F) to be recorded in a portable recording medium (200); a divide size calculator (14) configured to calculate a divide size (d), wherein when the content data (F) whose selection is received is divided into a plurality of files by the divide size (d), a file size of each of the files being less than or equal to a predetermined file size (A), the file size of each of the files is more than or equal to a predetermined smallest divide size (x); a divider (16) configured to divide the content data (F) by adding remainder data obtained by dividing the content data (F) by the divide size (d) to one of the files divided by the divide size (d) when replay time of the remainder data is shorter than predetermined shortest replay time (s); and a transmitter (8) configured to transmit the files divided by the divider (16) to the portable recording medium (200).

FIG.1

**Description**

FIELD

Embodiments described herein relate generally to a recorder and a file dividing method.

BACKGROUND

In recent years, a recorder connected to a television receiver and the television receiver that has a built-in recording module such as a hard disk drive (HDD) record video contents, and the contents are dubbed or moved (hereinafter, referred to as dubbed) into a portable recording medium, such as a secure digital (SD) card. Subsequently, the dubbed contents are replayed and viewed by portable electronic equipment or other replaying apparatuses, which has been widely performed.

Video contents may be divided into a plurality of files according to the specifications of a portable recording medium and a replaying apparatus when dubbed in the portable recording medium. For example, when an SD card is used as the portable recording medium, video contents are divided into files each of which has a file size (of 2 gigabytes, for example) according to the SD-Video standard and are dubbed in the recording medium. A conventional art according to file dividing discloses a data processor that provides a divided prohibited position back and front of each chapter according to chapter information to determine a divide position.

However, in the conventional art, when contents are divided into a plurality of files, files each of which has extremely small size may be created because the size of the divided files is not considered. In this case, the replay time of the files having small sizes may be significantly shorter than the replay time of the other divided files, and thus, there is room for improvement in terms of convenience.

The invention prevents the size of divided files from being too small when files are divided to dub the contents.

SUMMARY

To overcome the problems and achieve the object mentioned above, according to an embodiment, a recorder comprises: a content selection receiver configured to receive selection of content data to be recorded in a portable recording medium; a divide size calculator configured to calculate a divide size, wherein when the content data whose selection is received is divided into a plurality of files by the divide size, a file size of each of the files being less than or equal to a predetermined file size, the file size of each of the files is more than or equal to a predetermined smallest divide size; a divider configured to divide the content data by adding remainder data obtained by dividing the content data by the divide size to one of the files divided by the divide size when replay time of the remainder data is shorter than predetermined shortest replay time; and a transmitter configured to transmit the files divided by the divider to the portable recording medium.

According to another embodiment of the invention, a file dividing method comprises: receiving selection of content data to be recorded in a portable recording medium; calculating a divide size, wherein when the content data whose selection is received is divided into a plurality of files by the divide size, a file size of each of the files being less than or equal to a predetermined file size, the file size of each of the files is more than or equal to a predetermined smallest divide size; dividing the content data by adding remainder data obtained by dividing the content data by the divide size to one of the files divided by the divide size when replay time of the remainder data is shorter than predetermined shortest replay time; and transmitting the files divided by the dividing to the portable recording medium.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a structure of a recorder according to a first embodiment;
FIG. 2 is an exemplary schematic view of a file structure of content data;
FIG. 3 is an exemplary schematic view of a structure of moov containing metadata of contents;
FIG. 4 is an exemplary schematic view for explaining a file dividing method;
FIG. 5 is another exemplary schematic view for explaining a file dividing method;
FIG. 6 is an exemplary flowchart of a procedure of a file dividing process executed by a recorder illustrated in FIG. 1;
FIG. 7 is an exemplary schematic view for explaining a file dividing method according to a second embodiment; and

FIG. 8 is another exemplary flowchart of a procedure of a file dividing process executed by another recorder.

DETAILED DESCRIPTION

Various embodiments will be described hereinafter with reference to the accompanying drawings.

First embodiment

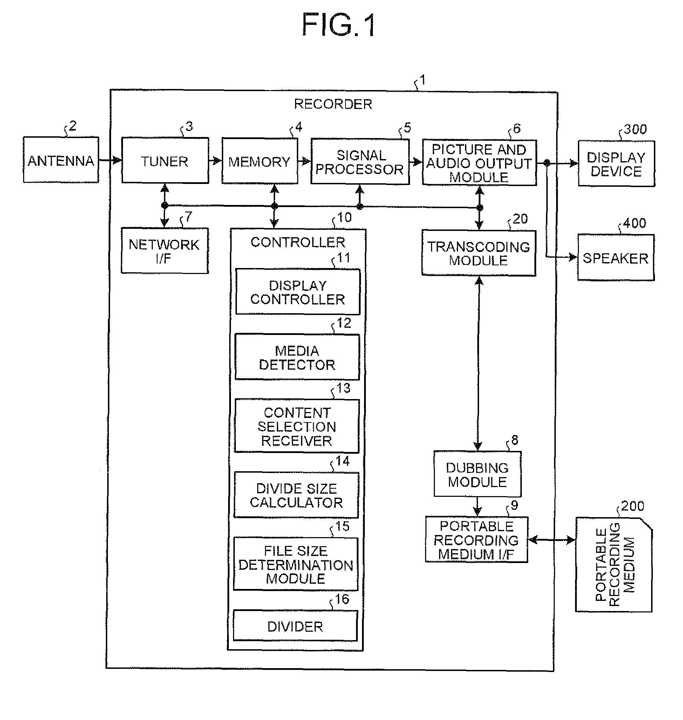

FIG. 1 is a block diagram of a structure of a recorder according to a first embodiment. As illustrated in FIG. 1, a recorder 1 is connected with a display device 300 and a speaker 400 via a bus and an interface (I/F). For example, a liquid crystal display and a plasma display can be used as the display device 300. The speaker 400 may also be built in the display device 300.

The hardware structure of the recorder 1 is described below. The recorder 1 records program contents (hereinafter, referred to as contents) broadcasted by digital broadcasting. As illustrated in FIG. 1, the recorder 1 comprises a tuner 3, a memory 4, a signal processor 5, a picture and audio output module 6, a network I/F 7, a dubbing module 8, a portable recording medium I/F 9, a controller 10, and a transcoding module 20. These components are connected with each other via a bus or the like.

The present embodiment describes an example in which the recorder 1 is applied to a hard disk drive (HDD) recorder comprising an HDD as the memory 4, but is not limited to this. As another example, the recorder 1 is applicable to a television receiver capable of recording content data of programs broadcasted on a plurality of channels at the same time in an external HDD connected via a universal serial bus (USB) or a local-area network (LAN) or in a built-in HDD. In this example, the display device 300 and the speaker 400 are built in the recorder 1, and the recorder 1 is connected with the memory 4 as the external HDD.

The tuner 3 receives content data from a broadcasting station via an antenna 2 and outputs the data to the memory 4 and the controller 10. The content data in this embodiment means a transport stream (TS) in which video data, audio data, other control data, and other data of contents are multiplexed.

The memory 4 stores (records) therein the content data output from the tuner 3 according to an instructions from the controller 10. The signal processor 5 converts the content data stored in the memory 4 into picture signals and audio signals and outputs the signals to the picture and audio output module 6 according to instructions from the controller 10.

The picture and audio output module 6 outputs the input picture signals and audio signals to the display device 300 and the speaker 400 via various interfaces. Thus, the display device 300 displays the images of the contents, and the speaker 400 outputs the sounds of the contents in synchronization with the images.

The recorder 1 also transmits and receives data to and from a portable recording medium 200 connected via the portable recording medium I/F 9. Examples of the portable recording medium 200 comprise a secure digital (SD) memory card and a secure digital high-capacity (SDHC) memory card. Examples of the portable recording medium I/F 9 comprise an SD memory card slot. The portable recording medium 200 may be connected to a memory card reader and writer or mobile equipment (not illustrated) via a USB to be read and written.

In the recorder 1, the transcoding module 20 converts content data output from the tuner 3 into an SD video format to store the data in the memory 4 according to instructions from the controller 10 in order to output contents in the SD video format via the portable recording medium I/F 9.

The transcoding module 20 converts (transcodes) the file format and image format of input content data into other formats according to instructions from the controller 10 depending on recording settings of users. Specifically, the transcoding module 20 converts data from Motion Picture Experts Group 2 (MPEG2) into H.264 or from a transport stream (TS) file format to an MP4 file format according to the predetermined setting to output the data. The transcoding module 20 can output data without performing conversion, for example, from a TS file format to a TS file format, depending on the settings.

The dubbing module 8 dubs the contents stored in the memory 4 into the portable recording medium 200 by the control of the controller 10 as described later. The portable recording medium 200 in which the contents are thus dubbed is connected to replaying equipment (not illustrated), the replaying equipment reads and replays the content data, and thus, the replaying equipment can replay the contents.

The controller 10 comprises, for example, a micro processing unit (MPU), a read-only memory (ROM), and a random access memory (RAM), and controls the signal processor 5 and the picture and audio output module 6 to perform various processing on images stored in the memory 4. The controller 10 also controls the dubbing module 8 to transmit and receive various data to and from the portable recording medium 200.

The functional structure of the recorder 1 is described below. The controller 10 controls the MPU to develop programs recorded in the ROM to the RAM to execute the programs, and thus functions as a display controller 11, a media detector 12, a content selection receiver 13, a divide size calculator 14, a file size determination module 15, and a divider 16, as illustrated in FIG. 1.

The display controller 11 controls the display device 300 to display an electronic program guide (EPG) obtained via the tuner 3, the list of contents stored in the memory 4, a menu screen for selecting operations such as recording and replaying, graphical user interfaces (GUI) for receiving various selections, or the like via the picture and audio output module 6. The display controller 11 also controls the display device 300 to display a content selection screen (not illustrated) for selecting contents (object contents) to be dubbed in the portable recording medium 200 from the list of the contents stored in the memory 4.

The media detector 12 detects the connection of the portable recording medium 200 when the portable recording medium I/F 9 is connected to the portable recording medium 200. Subsequently, the media detector 12 obtains information regarding the portable recording medium 200, such as the specification, the memorable capacity, the file system, and the data transmission rate, all of which of the portable recording medium 200.

The content selection receiver 13 receives the selection of contents (object contents) to be dubbed (or moved) into the portable recording medium 200 from the content selection screen as mentioned above. The content selection receiver 13 also reads metadata added to the selected object contents and obtains the file size or other characteristics of the object contents.

The content selection screen may also display contents stored in other than the memory 4. In other words, the content selection screen may display contents stored in a storage device (not illustrated) connected with the recorder 1 via the network I/F 7 and a network (not illustrated) to be structured to receive the selection of the contents.

The file structure of content data is described below. The present embodiment describes the use of, as content data, an mp4 file in which the file format is MP4 and the image codec system is Motion Picture Experts Group-4 Part 10 Advanced Video Coding (MPEG-4 AVC). However, the image codec system of the content data is not limited to this. As another example, a file dividing method according to the present embodiment may be performed on content data in the image codec system such as MPEG2.

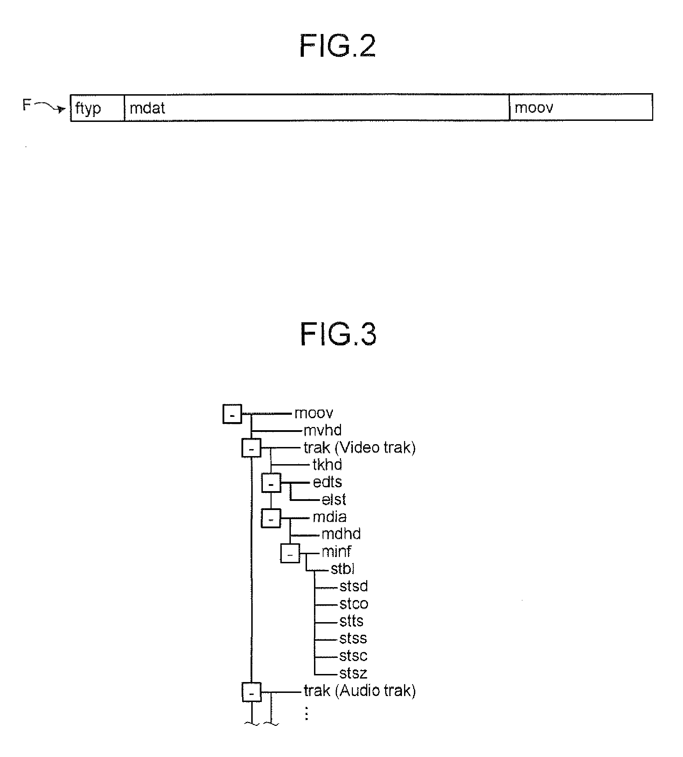

FIG. 2 is a schematic of a file structure of content data (a file F). As illustrated in FIG. 2, the file F has a box structure comprising ftyp, mdat, and moov.

In this embodiment, the ftyp is a box describing a file type and is comprised alone at the front-end of the file. The mdat is a box comprising media data and stores therein a content data main body such as video data and audio data. The file F may comprise a plurality of mdat boxes. The moov is a box comprising metadata and is comprised alone in the file F. Examples of information comprised as the metadata comprise meta description indicating the header information and the contents information of each track (such as video and audio) and time information.

FIG. 3 is a schematic of a structure of moov containing metadata of contents. As illustrated in FIG. 3, the inside of the moov is also a box structure. The moov comprises boxes, for example, sample table sample size (stsz) storing therein a table of data lengths (the number of samples of tracks) per track data replay unit, mvhd storing therein replay time of tracks or the like, and sample table sync sample (stss) storing therein a table of replay time per track data unit. The stss stores therein positions (sync sample) where random access of track data is possible.

Typically, when the file F is dubbed in the portable recording medium 200, the file F is divided into a plurality of files by a file limited capacity A (predetermined file size) according to the specification of the medium to be dubbed.

For example, the SD Video standard (ISDB-T Mobile Video Profile) established by the SD Card Association recommends the limiting of the size of a file of MPEG-4, AVC/H.264 based on the SD Video standard to 2 gigabytes. Accordingly, when the file F is dubbed in the SD memory card (portable recording medium 200), the file F is divided into a plurality of files, a file size of each of the divided files being less than or equal to 2 gigabytes.

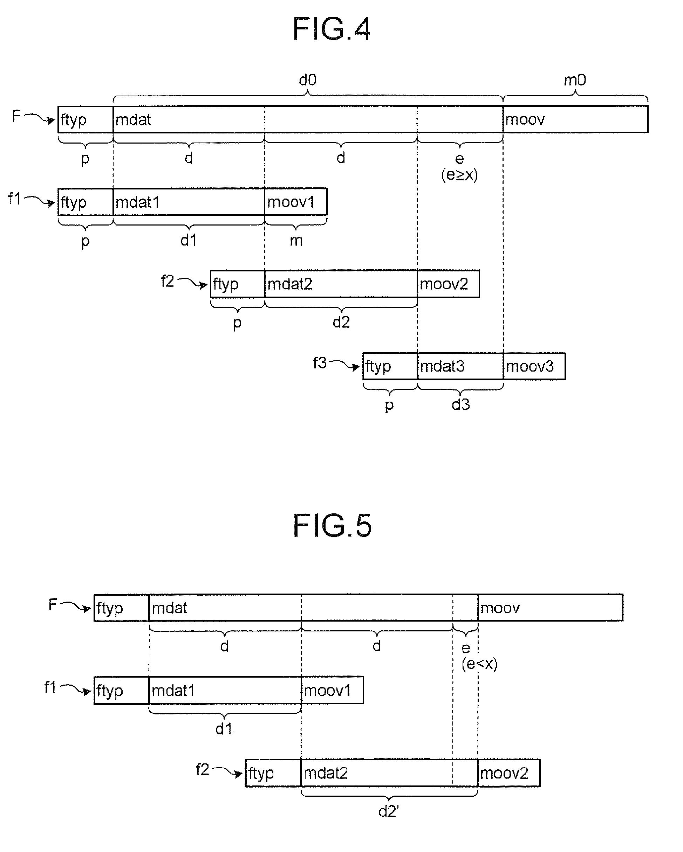

The content data (file F) of object contents is divided into a plurality of files (files f1, f2, and f3 in the example of FIG. 4), a file size of each of the divided files being less than or equal to the file limited capacity A (2 gigabytes, for example) according to the specification of the medium. In this process, the divide size calculator 14 calculates a divide size d of the file F with which the file size of mdat of each of the divided files becomes a smallest divide size x or more that is obtained from the product of an average bit rate of the mdat and a shortest replay time s. The derivation method of the smallest divide size x is described later.

The dividing method of the file F according to the present embodiment is described with reference to FIGS. 4 and 5. FIGS. 4 and 5 are schematics for explaining the file dividing method according to the present embodiment. FIG. 4 illustrates the file F in which the file size of mdat is indicated by $d0$, the file size of moov is indicated by $m0$, and $d0$ and $m0$ are divided into the files f1, f2, and f3. The number of divided files is three in this embodiment but is not particularly limited because the number of divided files varies depending on the data size of the file F.

As illustrated in FIG. 4, when the mdat comprised in the file F is divided from the front end by the divide size d ($d \leq A < d0$) that is the file limited capacity A or less. After the dividing, a file size $d1$ of the mdat of the file f1 and a file size $d2$ of the mdat of the file f2 are both equal to the divide size d ($d1=d2=d$). However, a file size $d3$ of the mdat of the file f3 at the tail end becomes a data size e that is smaller than the divide size d ($d3=e$).

As illustrated in FIG. 4, the ftyp and the moov are each added to the divided files f1, f2, and f3. A file size p of the ftyp is typically 24 bytes, and a file size m of the moov varies depending on the file size of the mdat.

In this structure, as illustrated in FIG. 4, when the data size e is the smallest divide size x or more (x≤e), the replay time of the file f3 is the shortest replay time s or more. However, as illustrated in FIG. 5, when the data size e is less than the smallest divide size x (e<x), the replay time of the file f3 is less than the shortest replay time s.

Therefore, when the data size e of the last divided file f3 is less than the smallest divide size x, the recorder 1 of the present embodiment adjusts the divide position again so as not to create the file f3 having this data size e. For example, in the example of FIG. 5, data (hereinafter, referred to as remainder data) having the data size e that is at the tail end of the mdat is added to the data of the next previous file f2. Thus, the file size of the file f2 becomes a file size d2' that is larger than the example of FIG. 4 (d2'>d2). Also in this structure, each of the file sizes of the files f1 and f2 needs to be the file limited capacity A or less. A calculating method of the divide size d satisfying a condition that the divide size d is the file limited capacity A or less when the divide position is adjusted again is described below.

The divide size calculator 14 calculates an average bit rate α (bps) from the total byte size of the data size of each replay unit (sample) of tracks stored in the stsz (see FIG. 3) and replay time (second(s)) of the tracks obtained according to the information of the mvhd, as indicated in the following formula (1). The replay time of tracks used in the formula (1) can be calculated by dividing mvhd. duration by mvhd. Time Scale (both of which are not illustrated) in the mvhd box.

$$\alpha = \text{Total byte number of sample sizes of tracks (byte(s))} \times 8 \text{ (bits)} / \text{replay time of tracks (second(s))} \qquad (1)$$

Subsequently, the divide size calculator 14 calculates the smallest divide size x (byte(s)) using the calculated average bit rate α (bps) and the shortest replay time s (second(s)) predetermined as the specification of the recorder 1, as indicated in the following formula (2).

$$x = \alpha \times s / 8 \qquad (2)$$

The file size of the moov increases in proportion to the replay time or the file size of the mdat. Accordingly, while the sizes of moov and mdat of the file F before being divided are indicated by m0 and d0, respectively, the sizes of moov and mdat after the file is divided (for example, of the file f1) are indicated by m and d, respectively. The following formula (3) is satisfied before and after the file dividing.

$$m/m0 = d/d0 \qquad (3)$$

As illustrated in FIG. 5, even when the remainder data of the data size e is added to the divided file (for example, the file f2), the following formula (4) needs to be satisfied so that the file size after the dividing becomes a predetermined file size A (gigabyte(s)) (2 gigabytes, for example) or less according to the specification.

$$p + d + x + m \leq A \qquad (4)$$

In other words, the divide size calculator 14 determines the divide size d as indicated in the formula (4) so that the sum of the file size (p and m) of metadata of the divided file, the file size (d) of media data of the divided file (d), and the smallest divide size x becomes the predetermined file size A or less according to the specification.

According to the formula (3) and the formula (4), the divide size d is indicated as the following formula (5).

$$d \leq (A - p - x) / (1 + m0/d0) \qquad (5)$$

Accordingly, the divide size calculator 14 determines the maximum value of the divide size d calculated when the formula (5) has equality as the divide size d.

As an example, when in the file F, the data capacity m0 of moov is 300 megabytes, the data capacity d0 of mdat is 6 gigabytes, the average bit rate is 2 Mbps, and the shortest replay time s is 30 seconds, the byte number of divided files d is calculated to be 1943 bytes.

The file size determination module 5 determines whether the data size e of the remainder data when the mdat of the file F is divided by the divide size d determined as described above is smaller than the smallest divide size x.

The divider 16 divides the file F by adding the remainder data when the file F is divided by the divide size d to one of the files divided by the divide size when replay time of the remainder data is shorter than the shortest replay time s. Typically, the replay time of media data is obtained by the product of the data size and the replay bit rate. Therefore, in this embodiment, the data size e and the smallest divide size x calculated by the formula (2) are compared to determine the length of the replay time.

More specifically, the divider 16 divides the mdat as the media data of the file F from the front end position of the mdat by the divide size d determined as described above. As illustrated in FIG. 5, when the data size e of the remainder data is smaller than the smallest divide size x, the remainder data is added to the previous file f2. On the other hand, as illustrated in FIG. 4, when the data size e of the remainder data is the smallest divide size x or more, the divider 16 determines the remainder data as the file f3.

The divider 16 can calculate the replay time of the remainder data from the data size e of the remainder data and the replay bit rate and determine whether the replay time is shorter than the shortest replay time s.

The divider 16 refers the stss in the moov and determines the divide position of the file F so that each of the divided files f1, f2, and f3 is divided by a unit that enables random access. In other words, the divider 16 determines as the divide position of the file F, a position where the divided file has the divide size d calculated as described above or less and that is a position of a sync sample enabling random access and being closest to the position of the divide size d.

In this embodiment, the divider 16 determines the position where the divided file has the divide size d or less as the divide position, but is not limited to this. As another example, a position having a size larger than the divide size d may be determined as the divide position of the file F so long as the size of the divided file is smaller than d+x at the position.

The dubbing module 8 divides the file F at the divide position determined as described above and dubs (transmits) the divided files f1, f2, and f3 in the portable recording medium 200. The dubbing module 8 creates the moov (moov1, moov2, and moov3) of the divided files f1, f2, and f3 by changing byte positional information in the moov of the file F to restructure it as the moov1, moov2, and moov3. The dubbing module 8 may also create the moov1, moov2, and moov3 by analyzing the mdat.

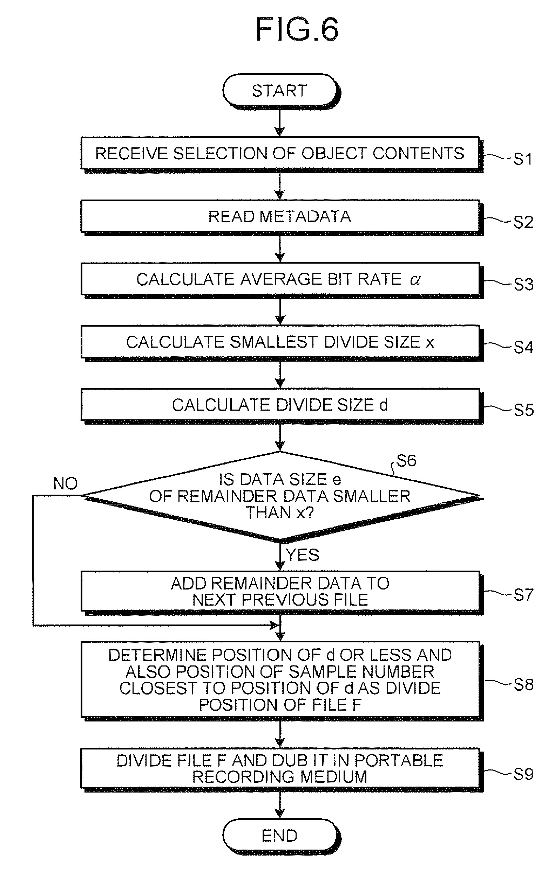

Subsequently, the procedure of a file dividing process executed by the recorder 1 is described below. FIG. 6 is a flowchart of the procedure of the file dividing process executed by the recorder 1.

The recorder 1 receives the selection of object contents to be dubbed in the portable recording medium 200 from a content selection screen (not illustrated) (S1). The metadata of the object contents is read (S2), and the average bit rate $\alpha$ is calculated by the formula (1) (S3). The recorder 1 calculates the smallest divide size x from the average bit rate $\alpha$ calculated at S3 and by the formula (2) (S4). Subsequently, the recorder 1 calculates the divide size d from the smallest divide size x calculated at S4 and by the formula (5) (S5).

The recorder 1 determines whether the data size e of the remainder data is smaller than the smallest divide size x (S6). If the data size e of the remainder data is the smallest divide size x or more (No at S6), the system control goes to S8. On the other hand, if the data size e of the remainder data is smaller than x (Yes at S7), the remainder data is added to the previous file f2 to divided the file F (S7).

The recorder 1 refers the metadata (stss) of the object contents and determines as the divide position of the file F, a position where the divided file has the divide size d or less and that is a position of a sync sample enabling random access and being closest to the position of the divide size d (S8). The dubbing module 8 of the recorder 1 divides the file F at a divide position T determined at S8 and dubs it in the portable recording medium 200 (S9) to complete the process.

In such a manner, in the recorder 1 of the first embodiment, the divide size d has a margin for containing the remainder data of the smallest divide size x. Therefore, when the data size e of the remainder data is smaller than the smallest divide size x, the remainder data can be added to the previous file f2 to divide the file F. Thus, the file size of the media data (mdat) after the dividing can avoid being less than the smallest divide size x, and when the file is divided to dub the contents, the file size after the dividing can be prevented from being too small.

The dubbing module 8 may transmit the divided files to a storage device (not illustrated) connected with the recorder 1 via the network I/F 7 and a network (not illustrated) to dub the obj ect contents in the portable recording medium 200 connected with the storage device.

The divider 16 may also equally divided the file F. In other words, in the example of FIG. 4, the file F may be divided so that the file sizes d1, d2, and d3 of the mdat after the dividing satisfy:

$$d1=d2=d3=(d+d+e)/3 \qquad (6).$$

In the example of FIG. 5, the file F may be divided as the following formula (7).

$$d1=d2=d3=(d+e)/2 \qquad (7)$$

The embodiment in which the file F is divided from the front end is described above, but the dividing method is not limited to this. As another example, the file F may be divided from the tail end, and when the remainder data at the front end is smaller than the smallest divide size x, the data may be added to the subsequent file. In other words, the remainder data means the minimum data when the file F is divided into a plurality of files. When the remainder data is plurality and the remainder data is smaller than the smallest divide size x, the remainder data may be added to the respective next previous or subsequent file.

Second embodiment

A recorder 201 of the second embodiment divides the file F at the chapter positions of content data. The structure of the recorder 201 according to the present embodiment is similar to the structure of the recorder 1 as illustrated in FIG. 1, and thus, the description in this embodiment is omitted.

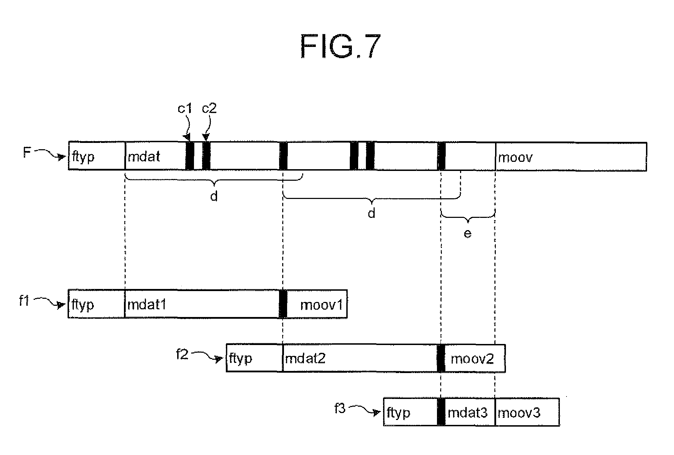

FIG. 7 is a schematic for explaining a file dividing method according to the present embodiment. As illustrated in FIG. 7, the file F of the object contents of the present embodiment comprises chapters c1, c2, and so on in Intra-coded (I) pictures or the like.

The divider 16 determines the divide position of the file F so that the divided files f1, f2, f3, and so on are divided at chapter positions. In other words, the divider 16 determines as the divide position of the file F, a position where the divided file has the divide size d or less and that is a chapter position closest to the position of the divide size d.

In a similar manner to the description above, the divider 16 may determine a position having a size larger than the divide size d as the divide position of the file F so long as the size of the divided file is smaller than d+x at the position.

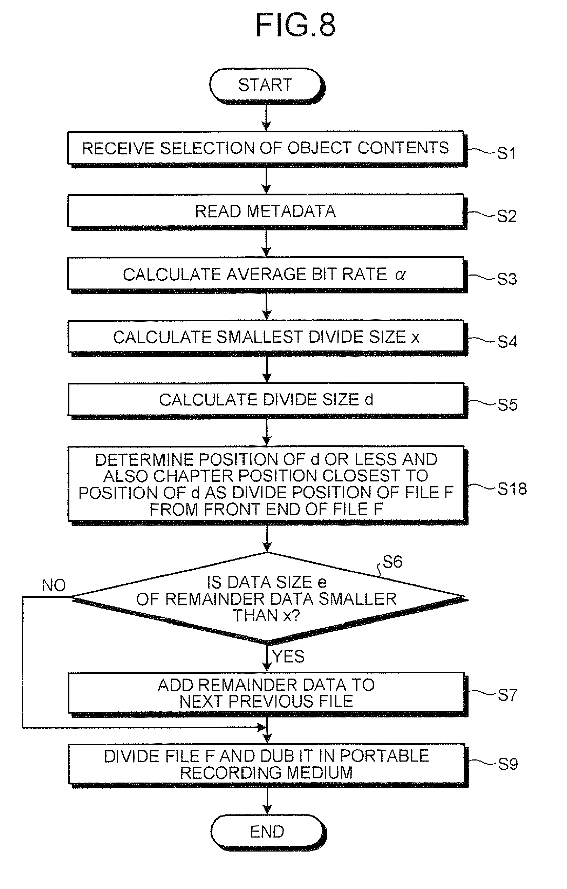

Subsequently, the procedure of the file dividing process executed by the recorder 201 is described below. FIG. 8 is a flowchart of the procedure of the file dividing process executed by the recorder 201. The description of steps for performing processes similar to those at the steps described in FIG. 6 is omitted in this embodiment.

The recorder 201 refers the metadata (stss) of the object contents and determines a position where the divided file has the divide size d or less and that is a chapter position closest to the position of the divide size d, as the divide position of the file F, from the front end of the file F in order (S18). The recorder determines whether the data size e of the remainder data is smaller than the smallest divide size x (S6), and after the step, processes similar to those of FIG. 6 are performed.

In such a manner, the recorder of the second embodiment divides a file at the chapter positions and thus can further improve picture quality for replaying contents.

As described above, according to the first and the second embodiments, the divide size d is calculated so that the file size after the dividing becomes the smallest divide size x or more, and thus, when the file is divided to dub the contents, the file size after the dividing can be prevented from being too small.

The embodiment in which contents are dubbed in the portable recording medium 200 via the portable recording medium I/F 9 is described above. However, the contents may be transmitted to another storage device (not illustrated) via the network I/F 7 and a network (not illustrated) such as a wireless LAN, and the storage device may be structured to dub the contents in the portable recording medium 200.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A recorder (1) comprising:

   a content selection receiver (13) configured to receive selection of content data (F) to be recorded in a portable recording medium (200);
   a divide size calculator (14) configured to calculate a divide size (d), wherein when the content data (F) whose selection is received is divided into a plurality of files by the divide size (d), a file size of each of the files being less than or equal to a predetermined file size (A), the file size of each of the files is more than or equal to a predetermined smallest divide size (x);
   a divider (16) configured to divide the content data (F) by adding remainder data obtained by dividing the content data (F) by the divide size (d) to one of the files divided by the divide size (d) when replay time of the remainder data is shorter than predetermined shortest replay time (s); and
   a transmitter (8) configured to transmit the files divided by the divider (16) to the portable recording medium (200).

2. The recorder (1) of Claim 1, wherein
   the divide size calculator (14) calculates as the divide size (d), a file size of media data of the divided file when a sum of a file size of metadata of the divided file, a file size of the media data of the divided file, and the smallest divide size (x) is less than or equal to the predetermined file size (A), and
   the divider (16) divides media data of the content data (F) by the divide size (d).

3. The recorder (1) of Claim 1 or 2, wherein the divider (16) determines as a divide position of the content data (F), a position where a size of the divided file is smaller than a sum of the divide size (d) and the smallest divide size (x) and that is a data position where track data can be randomly accessed and which is closest to a position of the divide size (d).

4. The recorder (1) of any one of Claims 1 to 3, wherein the divider (16) equally divides the content data (F).

5. The recorder (1) of any one of Claims 1 to 4, wherein the divider (16) determines as a divide position of the content data (F), a position where a size of the divided file is smaller than a sum of the divide size (d) and the smallest divide size (x) and that is a chapter position closest to a position of the divide size (d).

6. The recorder (1) of any one of Claims 1 to 5, wherein the divider (16) determines as a divide position of the content data (F), a position where a size of the divided file is less than or equal to the divide size (d) and that is a chapter position closest to a position of the divide size (d).

7. The recorder (1) of any one of Claims 1 to 6, wherein the transmitter (8) transmits the files divided by the divider (16) to a storage device connected to the recorder (1) via a network.

8. The recorder (1) of any one of Claims 1 to 7, wherein the content selection receiver (13) receives the selection of the content data (F) to be recorded in the portable recording medium (200) from the content data (F) stored in a storage device connected to the recorder (1) via a network.

9. A file dividing method comprising:

   receiving selection of content data (F) to be recorded in a portable recording medium (200);
   calculating a divide size (d), wherein when the content data (F) whose selection is received is divided into a plurality of files by the divide size (d), a file size of each of the files being less than or equal to a predetermined file size (A), the file size of each of the files is more than or equal to a predetermined smallest divide size (x);
   dividing the content data (F) by adding remainder data obtained by dividing the content data (F) by the divide size (d) to one of the files divided by the divide size (d) when replay time of the remainder data is shorter than predetermined shortest replay time (s); and
   transmitting the files divided by the dividing to the portable recording medium (200).

# FIG.1

# FIG.2

| F → ftyp | mdat | moov |

# FIG.3

# FIG.4

# FIG.5

# FIG.6

START

RECEIVE SELECTION OF OBJECT CONTENTS — S1

READ METADATA — S2

CALCULATE AVERAGE BIT RATE $\alpha$ — S3

CALCULATE SMALLEST DIVIDE SIZE x — S4

CALCULATE DIVIDE SIZE d — S5

S6
IS DATA SIZE e
OF REMAINDER DATA SMALLER
THAN x?

NO

YES

ADD REMAINDER DATA TO
NEXT PREVIOUS FILE — S7

DETERMINE POSITION OF d OR LESS AND
ALSO POSITION OF SAMPLE NUMBER
CLOSEST TO POSITION OF d AS DIVIDE
POSITION OF FILE F — S8

DIVIDE FILE F AND DUB IT IN PORTABLE
RECORDING MEDIUM — S9

END

# FIG.7

# FIG.8

```
                    ┌─────────────┐
                    │    START    │
                    └──────┬──────┘
                           ↓
   ┌──────────────────────────────────────────────┐
   │   RECEIVE SELECTION OF OBJECT CONTENTS        ├── S1
   └──────────────────────┬───────────────────────┘
                          ↓
   ┌──────────────────────────────────────────────┐
   │              READ METADATA                    ├── S2
   └──────────────────────┬───────────────────────┘
                          ↓
   ┌──────────────────────────────────────────────┐
   │      CALCULATE AVERAGE BIT RATE α             ├── S3
   └──────────────────────┬───────────────────────┘
                          ↓
   ┌──────────────────────────────────────────────┐
   │     CALCULATE SMALLEST DIVIDE SIZE x          ├── S4
   └──────────────────────┬───────────────────────┘
                          ↓
   ┌──────────────────────────────────────────────┐
   │         CALCULATE DIVIDE SIZE d               ├── S5
   └──────────────────────┬───────────────────────┘
                          ↓
   ┌──────────────────────────────────────────────┐
   │  DETERMINE POSITION OF d OR LESS AND          │
   │  ALSO CHAPTER POSITION CLOSEST TO             ├── S18
   │  POSITION OF d AS DIVIDE POSITION OF FILE F   │
   │  FROM FRONT END OF FILE F                     │
   └──────────────────────┬───────────────────────┘
                          ↓
```

S6

IS DATA SIZE e OF REMAINDER DATA SMALLER THAN x?

NO

YES

ADD REMAINDER DATA TO NEXT PREVIOUS FILE — S7

DIVIDE FILE F AND DUB IT IN PORTABLE RECORDING MEDIUM — S9

END

Europäisches
Patentamt

European
Patent Office

Office européen
des brevets

## EUROPEAN SEARCH REPORT

Application Number

EP 11 17 0508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/237396 A1 (HAGIWARA TSUYOSHI [JP] ET AL) 27 October 2005 (2005-10-27) <br> * paragraph [0053] - paragraph [0056]; figure 5 * <br> * paragraph [0072] - paragraph [0073] * <br> ----- | 1,9 | INV. <br> H04N5/907 |
| A | EP 1 923 791 A1 (MATSUSHITA ELECTRIC IND CO LTD [JP] PANASONIC CORP [JP]) 21 May 2008 (2008-05-21) <br> * paragraph [0074] - paragraph [0075]; figure 2 * <br> ----- | 1,9 | |
| A | US 2010/103287 A1 (OIKAWA RYO [JP]) 29 April 2010 (2010-04-29) <br> * paragraph [0087] - paragraph [0093]; figure 11 * <br> ----- | 1,9 | |
| A | US 5 857 203 A (KAUFFMAN STEVEN VICTOR [US] ET AL) 5 January 1999 (1999-01-05) <br> * column 7, line 53 - column 8, line 4 * <br> ----- | 1,9 | |
| | | | TECHNICAL FIELDS SEARCHED (IPC) <br><br> H04N <br> G06F <br> G11B |

The present search report has been drawn up for all claims

| Place of search | Date of completion of the search | Examiner |
|---|---|---|
| Berlin | 1 March 2012 | Gérard, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 0508

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2012

| Patent document cited in search report | | Publication date | Patent family member(s) | | Publication date |
|---|---|---|---|---|---|
| US 2005237396 | A1 | 27-10-2005 | CN | 1722815 A | 18-01-2006 |
| | | | JP | 4204509 B2 | 07-01-2009 |
| | | | JP | 2005318125 A | 10-11-2005 |
| | | | TW | I285809 B | 21-08-2007 |
| | | | US | 2005237396 A1 | 27-10-2005 |
| EP 1923791 | A1 | 21-05-2008 | EP | 1923791 A1 | 21-05-2008 |
| | | | JP | 4751889 B2 | 17-08-2011 |
| | | | JP | 2011070687 A | 07-04-2011 |
| | | | JP | 2011070688 A | 07-04-2011 |
| | | | US | 2009271429 A1 | 29-10-2009 |
| | | | US | 2011246529 A1 | 06-10-2011 |
| | | | WO | 2007023623 A1 | 01-03-2007 |
| US 2010103287 | A1 | 29-04-2010 | JP | 2010109593 A | 13-05-2010 |
| | | | US | 2010103287 A1 | 29-04-2010 |
| US 5857203 | A | 05-01-1999 | NONE | | |

EPO FORM P0459

For more details about this annex : see Official Journal of the European Patent Office, No. 12/82